# EUROPEAN PATENT APPLICATION

(11) **EP 2 876 089 A1**
(43) Date of publication of application: **27.05.2015**
(21) Application number: 14194965.1
(22) Date of filing: 26.11.2014
(51) Int. Cl.: C02F 1/44

(54) **Spiral water flow treatment apparatus**

(30) Priority: 26.11.2013 CN 201320759420 U
(71) Applicant: General Electric Company, Schenectady, New York 12345 (US)
(72) Inventor: Wang, Chen, 201203 Shanghai (CN); Lu, Su, 201203 Shanghai (CN); Li, Hua, 201203 Shanghai (CN); Gong, XueLian, 201203 Shanghai (CN)
(74) Representative: Illingworth-Law, William Illingworth

(57) **Abstract**

A spiral flow water treatment apparatus 10 including: a core collector 20 comprising a first portion 21 and a second portion 22; a spacer 30 spirally wound around the core collector 20; a separator 40 spirally wound around the core collector 20 and alternately with the spacer 30; a first spiral flow conduit 50 located outside the separator 40, connected with the first portion 21, and decreasing in volume thereof from far to close to the core collector 20; and a second spiral flow conduit 60 located within the separator 40, in fluid communication with the first spiral flow conduit 50, and connected to the second portion 22.

## Description

### TECHNICAL FIELD

Embodiments of the invention disclosed herein are related to a spiral water flow treatment apparatus.

### BACKGROUND OF THE INVENTION

Currently, the volumes of inlet channels for spiral water flow treatment devices in the industry are identical in size from start to finish. However, when the inlet water goes through the channel, the water product generated therein separates away from the channel causing less capacity of the inlet channel gradually; where there is a certain volume in the channel, the flow speed decreases and higher concentrations of residual material results in increased scaling and fouling in the channel, which causes adverse consequences.

Therefore, there is a need to improve spiral water flow treatment device to prevent or reduce scaling and/or fouling.

### BRIEF SUMMARY OF THE INVENTION

Embodiments of the invention relate to a spiral water flow treatment apparatus. The spiral water flow treatment apparatus includes: a core collector with a first portion and a second portion; a spacer spirally wound around the core collector; a separator spirally wound around the core collector and alternatively with the spacer; a first spiral flow conduit located outside the separator, connected with the first portion, and increasing in volume thereof as moving away from the core collector; and, a second spiral flow conduit located within the separator, in fluid communication with the first spiral flow conduit, and connected to the second portion.

### BRIEF DESCRIPTION OF DRAWINGS

These and other features, aspects, and advantages of the present invention will become better understood when the following detailed description is read with reference to the accompanying drawings, wherein:
FIG. 1 illustrates a schematic partially cutaway perspective view of a spiral flow water treatment apparatus according to some embodiments of the invention; and
FIG. 2 shows a schematic cross sectional view of the spiral flow water treatment apparatus of FIG. 1.

### DETAILED DESCRIPTION OF THE INVENTION

The following detailed descriptions illustrate some ways in which embodiments of the invention may be implemented. It should be pointed out that the Description cannot give detailed depiction to all features in the actual implementations in the specific depiction process of the implementations for the purpose of conciseness.

Unless otherwise defined, the technical terms or scientific terms used in the claims and description should have usual meanings that can be understood by those skilled in the art. It should be understood that the terms "first", "second" and similar terms used in the claims and description do not indicate any sequence, number or significance, but only for distinguishing different components. It should also be noted that the term "a" or "an" or a similar term does not means a limitation on number, but means at least one; the term "has," "contains," "there is (are)," "comprising," or "including" and the like only means the element or component prior to the term "has," "contains," "there is (are)," "comprising," or "including" contains the element, component or equivalent element listed following the term "has," "contains," "there is (are)," "comprising," or "including", but does not exclude other elements or components.. Unless specified otherwise, single or plural form of all items shall not be restrictive. Unless explicitly stated otherwise, terms like "or" shall not mean exclusion, but rather refers to the existence of at least one of the mentioned items (for example, ingredient) and includes situations where all of the mentioned items may be present.

Terms like "may" or "possible" are used herein to mean the possibility of occurrence in a certain environment, it has the possibility of certain nature, characteristic or feature, and/or shall be applicable to another kind of act through displaying one or more than one features, performances, or possibility of its association with the applicable act. For this reason, terms like "may" and "possible" used herein represent that the modified term is appropriate, capable, or suitable for such capability, features or usage referred herein, while considering that such modified terms might not be appropriate, capable, or suitable in some cases. For example, under some circumstances, the said event or capability failed to occur, and these cases shall use terms like "may" or "possible" to describe.

"Some implementation examples," etc., mentioned herein represents an element (such as characteristic, structure and/or feature) which is included in at least one embodiment described herein, which may or may not be seen in other embodiments. Furthermore, it is to be understood that elements described herein can be combined in any appropriate manner.

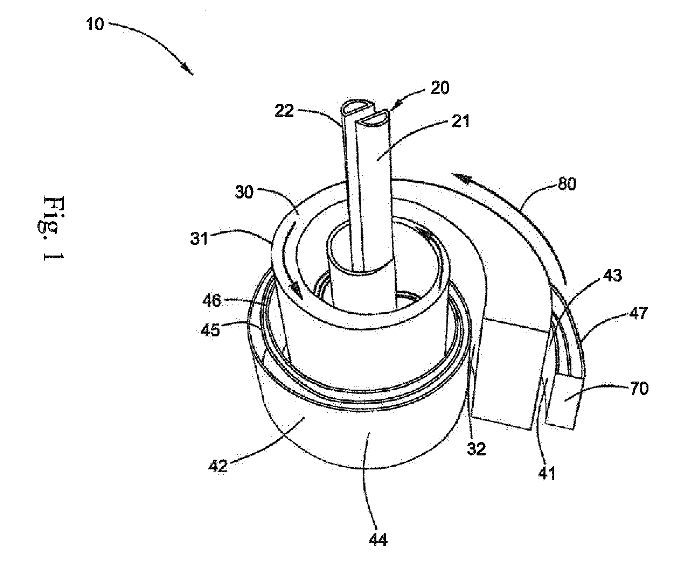

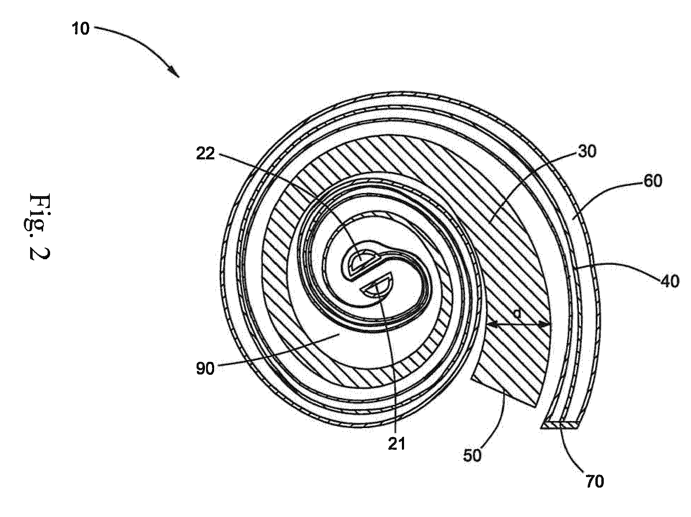

As displayed in Figure 1 and Figure 2, the spiral water flow treatment apparatus 10 in some embodiments contains a core collector20, a spacer 30, a separator 40, a first spiral flow conduit 50 and a second spiral flow conduit 60. The core collector 20 has a first portion 21 and a second portion 22. The spacer 30 is spirally wound around the core collector 20. The separator 40 is spirally wound around the core collector 20 and alternatively with the spacer 30. The first spiral flow conduit 50 is situated outside the separator 40, connected with the first portion 21, and its volume decreases as it progresses towards the core collector 20. The second spiral flow conduit 60 is situated inside the separator 40, in fluid communication with the first spiral flow conduit 50 and connected to the second portion 22.

The core collector 20 may be tubular or any other suitable shape and structure. In some implementation, the core collector 20 is a tube which extends through the entire length of the spiral flow water treatment apparatus. The tube may extend along the longitudinal direction of the structure with any suitable cross-sectional shape. In some implementation, the core collector 20 is a circular tube.

The core collector 20 can be prepared by any suitable material. The tube of the core collector for the spiral water flow treatment apparatus may consist of a metal tube, plastic tube, ceramic tube or other similar tubes. In some implementation examples, the core collector is prepared by using thermoplastics, such as polyethylene, polyethylene terephthalate, polycarbonate, or acrylonitrile-butadiene-styrene.

The core collector of the spiral water flow treatment apparatus described herein may be acquired through a variety of preparatory methods, such as injection molding, blow molding, plastic injection molding, overmolding or gas-assisted molding and so forth.

The core collector tube may be perforated or slotted, by may also be a non-perforated or non-slotted form with sufficient permeability to allow fluid contacting the spiral flow conduit to flow into the tube. In some implementation examples, the core collector shall consist of a section of perforated tube used to connect with the spiral flow conduit and a section of non-perforated tube which is not in contact with the spiral flow conduit.

If necessary, the material, shape and structure between the first portion 21 and the second portion 22 may be either the same, or not the same. In some implementation, as shown on Figure 1 and Figure 2, the first portion 21 and the second portion 22 are separated. In some implementation examples, the first portion 21 is not separated from the second portion 22.

The spacer 30 can be any suitable shape and made of any suitable material, and includes a first spacer surface 31 and a second spacer surface 32, which is located at the opposite side. In some implementation, the thickness d of the spacer decreases as it moves from the end remote from the core collector to the end closest to the core collector. Among some implementation examples, the spacer 30 may consist of structures or means for preventing the accumulation of saluted materials in the aqueous solution (not illustrated in the figure).

In some implementation examples, the spacer 30 may include flexible sheet material which allows the aqueous solution to pass through. In some implementation examples, the spacer 30 consists of a perforated plastic sheet, perforated metal sheet, porous composite material, plastic fabric, plastic net, natural materials, such as wood material, or any combination thereof. For the spiral water flow treatment apparatus containing more than one spacer, each spacer can be made of the same material or different material. For example, one spacer may be made of plastic fabric, while another spacer is made of natural materials, such as wood materials. In addition, a spacer may be made of different materials in different locations along the aqueous solution's direction of flow. For example, a part of the spacer may be made of polyethylene, while another part is made of polypropylene.

The separator 40 may be any appropriate shape and configuration, including a first separator surface 41, which is opposite the first spacer surface 31, and a second separator surface 42, which is opposite the second spacer surface 32. The first spiral flow conduit 50 is situated between the first separator surface 41 and that of the second separator surface 42.

In some implementation examples, the separator 40 shall consist of a folded membrane assembly, which contains a first membrane layer 43 including the first separator surface 41, a second membrane layer 44 including the second separator surface 42 and a carrier layer 45 between the first membrane layer 43 and second membrane layer 44. In some implementation examples, the separator 40 includes a reverse osmosis unit.

The separator 40 can be made of any material suitable for water-treatment. For example, US patent No. 4,277,344 described a reverse osmosis membrane formed by reacting aromatic polyamine and polyacyl halide, which when used as a separation element may block sodium, magnesium and calcium cations, and chlorine, sulfate and carbonate anions. As another example, US Patent No. 4,277,344 described a polymeric film produced by means of a reaction between an aromatic polyacyl halide and a bi-functional aromatic amine. The polymeric film is used as a separating member, and can effectively block certain kinds of salts, such as nitrates. A variety of membranes and materials suitable for permeation layers are known and are suitable for use as the separator for the spiral flow water treatment apparatus of embodiments of the invention. In addition, in some implementation examples, the membranes utilized in the separator are commercially purchased.

Materials suitable for the carrier layer 45 include soft-based material, which allows water to pass through. Materials used in the carrier layer 45 may be the same or different from that used for the spacer 30. In some implementation examples, the carrier layer 45 shall consist of a perforated plastic sheet, perforated metal sheet, porous composite material, plastic fabric, plastic net, natural materials, such as wood materials, or combinations thereof. For the spiral water flow treatment apparatus with more than one spacer, each spacer may be made of the same material or different material. For example, there may be a spacer made of plastic fabric and another spacer made of natural materials, such as wood materials. In addition, a single spacer may be made of different materials at different locations along the direction of water flow. For example, a part of the spacer may be made of polyethylene, while another part of the spacer may be made of polypropylene.

In some implementation examples, the spiral water flow treatment apparatus 10 includes a sealing element 70 configured to prevent direct fluid communication between the first and the second spiral flow conduits 50 and 60. The sealing element 70 may be a linear seal (for example, cured adhesive), which is used to seal and bond the outer most end of the carrier layer 45 to the first and second membrane layers 43 and 44 adjacent to both sides, wherein such sealing lines extend along the entire length of the spiral water flow treatment apparatus 10. Many viscous sealants, such as glue and double-sided tape, are suitable for the sealing element.

According to another implementation example, a method of producing a spiral water flow treatment apparatus is disclosed. The method includes: the spacer 30 starts from the first portion 21; the separator 40 starts from the second portion 22; the spacer 30 and the separator 40 alternate. The first spiral flow conduit 50 which is defined by the spacer 30 and formed between the first and second separator surfaces 41 and 42 of the separator 40 and the second spiral flow conduit 60, which is defined by the carrier layer 45 and formed between the internal surfaces 46 and 47.

The spiral water flow treatment apparatus described herein may be used to treat numerous types of water, such as municipal and industrial water. In some implementations, the spiral water flow treatment apparatus is used to perform a spiral saline water separation, for example to separate salt from the sea water or brine. In some embodiments, the spiral water flow treatment apparatus can be accommodated in a cylindrical housing (not shown in the figure). The housing may allow the solution (such as saline) to flow from the outer side of the spiral water flow treatment apparatus to the inside of the core collector along the first spiral flow conduit.

The sealing element 70 prevents the solution from entering into the second spiral flow conduit 60. While the solution is flowing, some liquid in the solution passes through the first and second separator surfaces to the second spiral flow conduit 60 (sometimes referred to as osmosis fluid, product water, or permeate), and the remaining solution in the first spiral flow conduit enters into the first portion 21 of the core collector as concentrated fluid (sometimes referred to as concentrate).

Due to the barrier effect of the first and second separator surfaces, the solute does not permeate through the surfaces of the first and second surfaces to the second spiral flow conduit along with the permeate, and the permeate does not return back to the first spiral flow conduit. Thus, when the solution, for example sea water, starts to flow from the first spiral flow conduit to the first portion along the direction shown by arrow 80, the concentration of the saluted material in the solution, such as salt, may continuously increase; therefore, the concentration fluid at the first portion will contain a higher concentration of solute than the original solution. That is, the concentrated fluid will have more salt than the sea water that entered the first spiral flow conduit. Accordingly, due to the barrier effect of salt to penetrate the osmosis membrane, the permeate which enters the second spiral flow conduit has different concentrations, i.e. the salt content of the solution is relatively decreased.

While the solution flows along the first spiral flow conduit, the total volume is reduced due to the exit of permeate. In accordance with an embodiment, the volume of the first spiral flow conduit is reduced as it proceeds towards the core collector. The solution flow rate in the first spiral flow conduit can be maintained at a high level, thereby reducing or eliminating scaling and/or fouling inside the conduit.

Because the concentrate and permeate flow to the first and the second portions of the core collector along the spiral route defined by the first and second spiral flow conduit, the flow inside such spiral flow conduit can be called "spiral flow."

In Figures 1 and 2, the spiral water flow treatment apparatus 10 has some gaps 90 located between each layer. In addition, it shall be illustrated that such gaps shown in Figure 1 and 2 were effects from certain exaggeration or enlargement, so as to display or describe the structures of spiral water flow treatment apparatus more clearly; the actual sizes of these gaps might be smaller than those displayed in the figures, and or may not exist in some implementation examples. In addition, all gaps inside the spiral water flow treatment apparatus can be filled with a sealant, thereby eliminating the gaps. Any sealants suitable to eliminate such gaps may be utilized for example curing sealant, adhesive sealant or other similar sealants.

Individuals skilled in the art upon reading the present application will understand that, during the solution flowing to the core collector, the flow rate may not significantly decrease despite the reduced total volume caused by separation of the permeate fluid because of the change made to the volume of the first spiral flow conduit. The maintenance of the faster flow rate may effectively eliminate or reduce scaling and/or fouling inside the spiral water flow treatment apparatus.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A spiral flow water treatment apparatus (10) comprising:
a core collector (20) comprising a first portion (21) and a second portion (22);
a spacer (30) spirally wound around the core collector;
a separator (40) spirally wound around the core collector and alternately with the spacer;
a first spiral flow conduit (50) located outside the separator, includes a first end connected with the first portion and a second end remote from the first portion, and the cross-sectional volume of the first spiral flow conduit decreases between the first and second ends, in the direction of the first end; and
a second spiral flow conduit (60) located within the separator, in fluid communication with the first spiral flow conduit, and connected to the second portion.

2. The apparatus of claim 1, wherein the spacer comprises a first spacer surface and an opposite second spacer surface.

3. The apparatus of claim 2, wherein the separator comprises a first separator surface facing the first spacer surface and an opposite second separator surface facing the second spacer surface.

4. The apparatus of claim 3, wherein the first spiral flow conduit is located between the first separator surface and the second separator surface.

5. The apparatus of any preceding claim, wherein the separator comprises a folded membrane assembly comprising a first membrane layer comprising the first separator surface, a second membrane layer comprising the second separator surface and a carrier layer between the first and the second membrane layers.

6. The apparatus of any preceding claim, comprising a sealing element configured to prevent direct fluid communication between the first and the second spiral flow conduits.

7. The apparatus of any preceding claim, wherein the separator comprises a reverse osmosis device.

8. The apparatus of any preceding claim, wherein the first portion is integral with the second portion.

9. The apparatus of any preceding claim, wherein the first portion is separate from the second portion.

10. The apparatus any preceding claim, wherein a thickness of the spacer decreases from far from to close to the core collector.
